# EUROPÄISCHE PATENTSCHRIFT

(11) **EP 1 304 153 B1**
(45) Veröffentlichungstag und Bekanntmachung des Hinweises auf die Patenterteilung: **03.01.2007**
(21) Anmeldenummer: 01124915.8
(22) Anmeldetag: 19.10.2001
(51) Int. Cl.: B01D 46/44

(54) **Wartungsgerät sowie Verbrauchsmittel und kapazitiver Sensor hierfür**
Preparation unit for compressed air, consumables and capacitive sensor
Appareil de traitement d'air comprimé avec capteur capacitif

(43) Veröffentlichungstag der Anmeldung: 23.04.2003
(73) Patentinhaber: Festo AG & Co., 73734 Esslingen (DE)
(72) Erfinder: Hörz, Jürgen, 70184 Stuttgart (DE); Keinrad, Klaus, 73257 Köngen (DE)
(74) Vertreter: Vetter, Hans

(56) Entgegenhaltungen:
- EP-A- 0 065 019
- EP-B- 0 594 216
- DE-A- 19 645 009
- US-A- 4 552 570
- US-A- 4 594 892
- PATENT ABSTRACTS OF JAPAN vol. 016, no. 007 (M-1198), 9. Januar 1992 (1992-01-09) -& JP 03 229979 A (HITACHI LTD), 11. Oktober 1991 (1991-10-11)

## Beschreibung

Die Erfindung betrifft ein Wartungsgerät, insbesondere einen Öler oder ein Filtergerät, zur Aufbereitung eines Druckmediums.

Zur Aufbereitung von einem Druckmedium, beispielsweise von Druckluft, kommen Wartungsgeräte in vielfältiger Ausführung zum Einsatz. Beispielsweise werden Filtergeräte zur Filterung des Druckmediums verwendet, wobei beispielsweise Verschmutzungen aus dem Druckmedium entfernt werden. Ferner kann ein Filtergerät oder ein Trockner dazu vorgesehen sein, beispielsweise Kondenswasser aus dem Druckmedium zu entfernen. Weiter kann ein solches Wartungsgerät beispielsweise ein Öler sein, der Öl oder ein sonstiges Additiv in das Druckmedium einbringt, so dass die mit dem Druckmedium versorgten Einheiten, beispielsweise Ventile, durch das beigemengte Öl geschmiert werden.

In zunehmendem Maße werden bei derartigen Wartungsgeräten Betriebsparameter durch Sensoren erfasst. Im Allgemeinen handelt es sich dabei um sehr einfache Sensoren, nämlich um elektrische Schalter. Beispielsweise wird bei einem aus der DE 199 51 961 A1 bekannten Filtergerät eine Filtereinrichtung, nämlich eine Filterpatrone, durch geeignete Sensorik erfasst. Als hierfür geeignet werden beispielsweise einer oder mehrere mechanische Schalter sowie berührungslos wirkende Sensormittel, beispielsweise optisch oder magnetisch aktivierbare Sensormittel, vorgeschlagen.

Mechanische Schalter sind störungs- und verschleißanfällig. Gleiches gilt im Grunde genommen auch für die berührungslos wirkenden induktiven Schalter, bei denen es sich um Reed-Schalter handelt. Auch diese sind im Grunde genommen mechanische, wenn auch durch einen Magneten betätigte Schalter.

Für optische Sensoren ist sowohl eine Lichtquelle als auch ein Erfassungselement notwendig, so dass diese Lösung nicht nur teuer ist, sondern auch verhältnismäßig viel Einbauraum beim Wartungsgerät vorhanden sein muss.

Ein weiterer Nachteil der bekannten Sensoren ist, dass für jeden Betriebsparameter mindestens ein Sensor notwendig ist, zumeist aber mehrere. Mit einem mechanischen Schalter kann beispielsweise erfasst werden, ob eine Filterpatrone in ein Wartungsgerät eingesetzt ist oder nicht. Die zusätzliche Erfassung eines Filtertyps ist mit dem ein einziges elektrisches Ein- oder Aus-Signal liefernden mechanischen Schalter nicht möglich. Gleiches gilt beispielsweise für die Erfassung von Flüssigkeitspegeln in einem Wartungsgerät. Mit einem einzigen mechanischen Schalter, beispielsweise einem mechanischen Schwimmer-Schalter, kann lediglich ein einziger Pegel erfasst werden. Grundsätzlich verschiedene Betriebsparameter, beispielsweise das Vorhandensein eines Filterelementes sowie der Pegelstand von sich unterhalb des Filterelements ansammelndem Kondenswasser, können mit einem einzigen bekannten Sensor, zum Beispiel einem einzigen mechanischen Schalter, nicht erfasst werden. Es sind hierfür mehrere mechanische Schalter notwendig, so dass verhältnismäßig viel Bauraum erforderlich ist. Das Wartungsgerät wird dadurch voluminös und zudem teuer.

Die EP 0 065 019 offenbart ein Wartungsgerät in Gestalt eines Trockners, der mit einer hygroskopisches Granulat enthaltenden Patrone bestückbar ist. Der Sättigungsgrad des hygroskopischen Materials in der Patrone wird mittels eines Kondensators gemessen, der einen Bestandteil der Patrone bildet. Eine erste Elektrode befindet sich in dem Granulat und wirkt mit einer zweiten, durch die Gehäusewand der Patrone gebildeten Elektrode zusammen. Auch aus der DE 196 45 009 A1 ist eine ähnliche Kartusche mit einem Adsorptionsmittel für ein zu trocknendes Gas bekannt. In der Kartusche sind zwei elektrische Leiter vorhanden, die zur kapazitiven Messung des Adsorptionsmittelzustandes dienen. Zur Kontaktierung der Elektroden sind Kontakte an einer Behälterinnenwand eines Gehäuses zur Aufnahme der Trocknungskartusche erforderlich.

Die US 4,594,892 zeigt einen Sensor zur kapazitiven Erfassung eines Füllstandes.

Es ist daher die Aufgabe der vorliegenden Erfindung, ein Wartungsgerät bereitzustellen, bei dem auf einfache und zuverlässige Weise Betriebsparameter des Verbrauchsmittels oder eines Druckluft-Ausscheidungsprodukts, die sich im Wartungsraum des Wartungsgerätes befinden, kapazitiv erfassbar sind.

Diese Aufgabe wird durch ein Wartungsgerät gemäß der technischen Lehre des Anspruchs 1 gelöst.

Das Wartungsgerät weist ein Gehäuse auf, in dessen Innerem sich ein Wartungsraum zur Aufnahme eines zur Aufbereitung des Druckmediums verwendbaren Verbrauchsmittels und/oder zur Aufnahme von Ausscheidungsprodukten aus dem Druckmedium befindet. In diesem Fall ist der Sensor dem Wartungsraum zum Erfassen eines dort anordenbaren Dielektrikums, beispielsweise eines Filterelements oder eines Additivs, zugeordnet, von dem der mindestens eine Betriebsparameter abhängt. Gegebenenfalls kann sich der Wartungsraum auch bis zu einem Druckmedium-Einlass und/oder einem Druckmedium-Auslass des Wartungsgeräts erstrecken.

Im Vergleich zu den seither bei Wartungsgeräten verwendeten Sensoren ist der erfindungsgemäße kapazitive Sensor kompakt bauend und preisgünstig zu fertigen. Er erlaubt nicht nur die Messung eines einzigen Betriebsparameters, sondern bei Bedarf auch mehrerer Betriebsparameter. Beispielsweise können für ein als Filtergerät ausgestaltetes Wartungsgerät unterschiedliche Typen von Filterelementen vorgesehen sein. Jedem der unterschiedlichen Filterelement-Typen ist eine individuelle, kapazitiv erfassbare Codierung zugeordnet. Beispielsweise weisen die unterschiedlichen Filterelement-Typen unterschiedlich große Metallanteile auf. Im einfachsten Fall erfasst der erfindungsgemäße kapazitive Sensor, ob ein Filterelement in das Wartungsgerät eingesetzt ist oder nicht. Bei einer kapazitiv erfassbaren unterschiedlichen Codierung des Filterelementes ist es ihm allerdings auch möglich, den jeweiligen Filterelement-Typ zu erfassen, beispielsweise einen Fein-Filter oder einen Grob-Filter. Dies ist beispielsweise bei Druckluftanlagen von besonderer Relevanz, da deren Komponenten bei Einsatz eines ungeeigneten Filterelementes, beispielsweise eines Grob-Filters anstatt eines Fein-Filters, durch unzureichend gefilterte Druckluft zerstört werden können.

Die mindestens eine erste Elektrode weist eine langgestreckte Form auf und ist dementsprechend parallel zur Längsachse des Wartungsraums, insbesondere in vertikaler Richtung, anordenbar. Auf diese Weise liegt ein verhältnismäßig großer Bereich des Wartungsraums, insbesondere mehrere Abschnitte des Wartungsraums, im Erfassungsbereich der mindestens einen Elektrode.

Insbesondere bei der vorgenannten Ausgestaltung der Elektrode ist es zweckmäßig, diese plattenartig, insbesondere als Leiterplatte, auszugestalten.

Darüber hinaus können mit dem erfindungsgemäßen kapazitiven Sensor auch im Grunde genommen völlig unterschiedliche Betriebsparameter erfasst werden. Beispielsweise kann, um an das vorgenannte Beispiel anzuknüpfen, nicht nur das Vorhandensein und/oder der Typ eines Filterelementes erfasst werden, sondern ob sich in dem Wartungsgerät beispielsweise Ausscheidungsprodukte aus dem Druckmedium, zum Beispiel Kondenswasser, angesammelt hat. Sogar die jeweilige Menge des Ausscheidungsprodukts, beispielsweise ein Kondenswasser-Pegel, ist mit dem Sensor erfassbar. Ferner kann mit dem Sensor eine Art Partikelzähler realisiert werden, dessen Betriebsparameter durch den Sensor erfasst werden. Dabei werden sich an einem Sammelelement, beispielsweise an einem Filterelement, anlagernde Partikel, z.B. Öl-Partikel, oder sonstige sich anlagernde Stoffe durch den Sensor erfasst. Dabei kann auch eine zeitliche Änderung der Partikelmenge durch den Sensor erfasst werden. Die räumliche Ausgestaltung des Sensors muss lediglich so sein, dass sich die Stoffe, deren Betriebsparameter durch den Sensor erfasst werden sollen, in dessen Erfassungsbereich befinden.

Der Wartungsraum ist von einer Gehäusewandung umgeben, welche einen Sensoraufnahmeraum für die mindestens eine erste Elektrode des Sensors aufweist. Der Sensoraufnahmeraum ist vom Wartungsraum durch eine Trennwand getrennt. Wenn der Sensoraufnahmeraum offen ist, ist die Elektrode in einem Schutzgehäuse angeordnet.

Vorteilhaft ist an der Gehäusewandung mindestens eine zweite, als Gegenelektrode ausgebildete Elektrode des Sensors angeordnet. Es ist auch möglich, dass ein Bereich der Gehäusewandung mindestens eine solche zweite Elektrode des Sensors bildet. Kombinationen beider Maßnahmen sind jederzeit möglich. Jedenfalls sind die erste und die zweite Elektrode des Sensors derart angeordnet, dass elektrische Feldlinien zwischen diesen den Wartungsraum durchdringen können und somit ein dort anordenbares Dielektrikum durch den Sensor erfassbar ist.

Es ist auch möglich, dass die Elektrode und die Gegenelektrode durch mindestens zwei benachbarte, zum Wartungsraum orientierte Sensorflächen gebildet werden, so dass elektrische Feldlinien zwischen diesen den Wartungsraum durchdringen können und somit ein dort anordenbares Dielektrikum durch den Sensor erfassbar ist. Die benachbarten Sensorflächen können beispielsweise an einer Art Sensorstab angeordnet sein. Bei einer Weiterbildung dieser Variante sind mehrere benachbarte, zum Wartungsraum orientierte Sensorflächen als Elektroden und diesen jeweils zugeordnete Gegenelektroden vorgesehen. Die jeweiligen Sensorflächen können dabei jeweils ständig als Elektrode bzw. Gegenelektrode dienen. Es ist aber auch möglich, dass mindestens eine derartige Sensorfläche abwechselnd als Elektrode und als Gegenelektrode fungiert.

Vorzugsweise erstreckt sich der Sensor entlang eines ersten und eines zweiten Abschnitts des Wartungsraums, wobei durch den Sensor in dem ersten Abschnitt mindestens ein erster und in dem zweiten Abschnitt mindestens ein zweiter Betriebsparameter des Wartungsgeräts erfassbar ist. Beispielsweise kann in dem ersten Abschnitt des Wartungsraums ein Filterelement und in dem zweiten Abschnitt ein Additiv für das Druckmedium angeordnet sein.

Zweckmäßigerweise ist der mindestens einen ersten Elektrode eine Abschirmung zugeordnet, die an deren dem Wartungsraum abgewandten Seite angeordnet ist. Die Abschirmung schirmt die mindestens eine erste Elektrode gegenüber äußeren Störfeldern ab, so dass im Wesentlichen nur das zwischen der mindestens einen ersten und der mindestens einen zweiten Elektrode befindliche elektrische Feld bei der Erfassung des mindestens einen Betriebsparameters wirksam ist.

Die Trennwand zwischen Sensoraufnahmeraum und Wartungsraum ist zweckmäßigerweise dünner als die Gehäusewandung, so dass ihre Wirkung als Dieleketrikum minimiert ist.

Die mindestens eine erste Elektrode ist vorzugsweise an einem diese haltenden und fixierenden Haltemittel angeordnet. Die Elektrode kann dann verhältnismäßig filigran ausgeführt sein. Die notwendige Stabilität erhält sie durch das Haltemittel.

Das Haltemittel ist zweckmäßigerweise zum Halten der mindestens einen ersten Elektrode in dem Sensoraufnahmeraum ausgebildet. Dabei weist das Haltemittel mit der darauf angeordneten mindestens einen ersten Elektrode eine sich in Längsrichtung verjüngende, insbesondere halbkonische, Außenkontur und der Sensoraufnahmeraum eine mit dieser Außenkontur korrelierende Innenkontur auf, so dass das Haltemittel mit der darauf angeordneten Elektrode keilartig in den Sensoraufnahmeraum einbringbar und in diesem fixierbar ist. Die Elektrode wird somit in einer stabilen Position gehalten, womit eine hohe, insbesondere gut reproduzierbare, Messgenauigkeit erzielbar ist.

Zweckmäßigerweise weist der Sensor Auswertemittel auf, die an den beiden Elektroden erfasste Messwerte auswerten und dabei durch Vergleich der Messwerte mit mindestens einem Referenzwert den mindestens einen Betriebsparameter ermitteln. Bei dem Referenzwert kann es sich um einen einzelnen Wert handeln, beispielsweise um einen Spannungs- oder Kapazitätswert. Vorzugsweise jedoch sind Kennlinien bei den Auswertemitteln gespeichert oder von diesen aus einem externen Speicher abrufbar, so dass beispielsweise eine kontinuierliche Veränderung eines Additivpegels in dem Wartungsraum durch Vergleich mit der Kennlinie durch die Auswertemittel ermittelbar ist.

Es versteht sich, dass die Auswertemittel einen Bestandteil des Sensors bilden können oder auch als mit dem Sensor koppelbare, separate Baueinheit ausgeführt sein können.

Die Fertigung des Wartungsgeräts, gegebenenfalls die Reparatur, wird dadurch vereinfacht, dass die Auswertemittel und die mindestens eine erste Elektrode eine insbesondere auswechselbare Baueinheit bilden. Elektrode und Auswertemittel können somit sozusagen an einem Stück am Wartungsgerät montiert werden und beispielsweise im Schadensfall wieder entfernt werden. Auf diese Weise ist es auch leicht möglich, einen Sensor des einen Typs gegen einen Sensor eines anderen Typs auszuwechseln.

In einer besonders bevorzugten Variante sind die Auswertemittel in einem im Deckel- oder Bodenbereich des Wartungsgeräts anordenbaren Basisgehäuse angeordnet, von dem die Elektrode absteht. Das Basisgehäuse kann dann beispielsweise als Handhabe zum Einbringen der Elektrode in das Wartungsgerät dienen. Ein weiterer Vorteil ist hierbei, dass eventuell von den Auswertemitteln ausgehende elektromagnetische Störfelder nicht oder nur unwesentlich auf die Elektrode einwirken.

Als Dielektrikum dient, wie bereits erwähnt, vorzugsweise ein Verbrauchsmittel, beispielsweise eine Filtereinrichtung und/oder ein Additiv, und/oder eine Flüssigkeit, insbesondere Wasser oder Öl, und/oder ein parematerabhängiges, sich bewegendes und dabei den Dielektrizitätswert im Wartungsraum veränderndes Element. Bei letzterem kann es sich beispielsweise um ein mehr oder weniger verunreinigtes Druckmedium handeln, das je nach Verunreinigung unterschiedliche Dielektrizitätswerte aufweist. Der erfindungsgemäße kapazitive Sensor kann auch eine eventuell im Wartungsraum auftretende Verschmutzung erfassen, beispielsweise eine Verschmutzung der Filtereinrichtung, wenn die Verschmutzung einen geeigneten Dielektrizitätswert aufweist.

Im Folgenden wird die Erfindung anhand eines Ausführungsbeispiels unter Zuhilfenahme der Zeichnung näher erläutert.

Es zeigen:
- Figur 1: ein Wartungsgerät 10 mit einem Sensor 11a, bei dem eine Mess-Elektrode 12 in einem separaten Schutzgehäuse 41 angeordnet ist,
- Fig. 2: einen Sensor 11b, bei dem im Vergleich zum Sensor 11a die Mess-Elektrode 12 kein separates Schutzgehäuse 41 aufweist,
- Fig. 3a: das Wartungsgerät 10 in schematischer Querschnittsansicht etwa gemäß einem Schnitt III-III in Fig. 1,
- Fig. 3b: die Querschnittsansicht des Sensor 11b gemäß Fig. 2, etwa vergleichbar mit der Ansicht gemäß Fig. 3a,
- Fig. 3c: einen Sensor 11c ebenfalls in der obengenannten Querschnittsansicht, dessen Mess-Elektrode 12 im Unterschied zu den Ausführungsformen gemäß Fig. 3a, 3b nicht an einem Haltemittel 42 angeordnet ist, und
- Fig. 4: Referenzkennlinien K1, K2, die von den Sensoren 11a-c bei der Erfassung von Betriebsparametern verwendet werden.

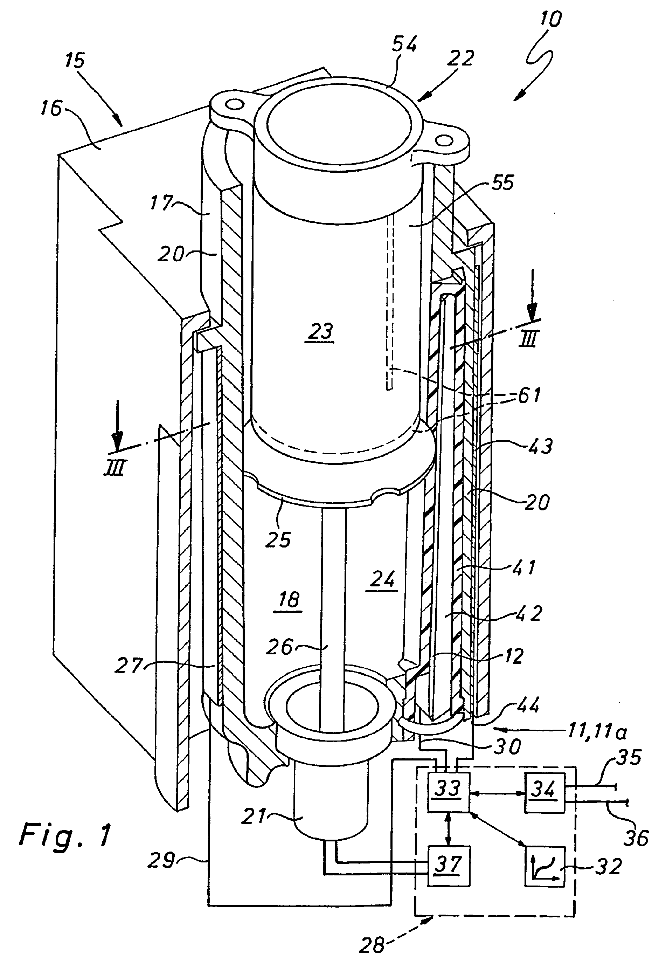

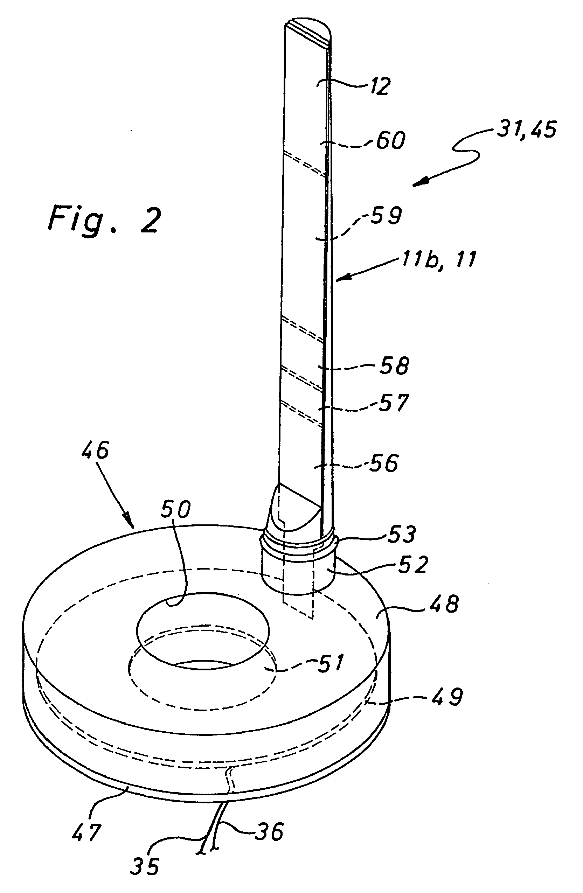

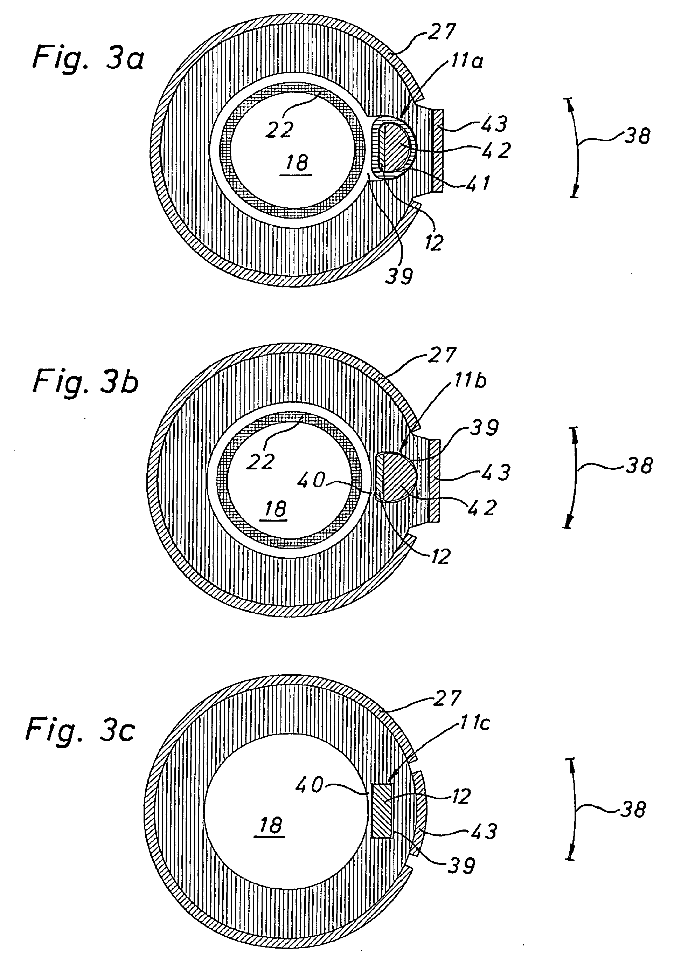

In den Figuren sind unterschiedliche Ausführungsformen sowohl eines Wartungsgerätes 10 als auch eines Sensors 11 gezeigt. Bei den Ausführungsformen gemäß Fig. 1 und 3a werden die betreffenden Komponenten im Folgenden jeweils mit einem Index "a" versehen, beispielsweise wird der Sensor 11 als Sensor 11a bezeichnet. Sinngemäß wird bei den Ausführungsformen gemäß Fig. 2 und 3b der Index "b" und bei der Ausführungsform gemäß Fig. 3c der Index "c" verwendet, das heißt, beispielsweise wird der Sensor 11 als Sensor 11b bzw. 11c bezeichnet. Soweit ein Beschreibungsteil alle Ausführungsformen umfasst, wird das entsprechende Bezugszeichen ohne angeführten Kleinbuchstaben verwendet, beispielsweise werden die Sensoren 11a bis 11c zusammenfassend als "Sensor 11" bezeichnet.

Das Wartungsgerät 10 ist beispielsweise ein Filtergerät zur Filterung eines Druckmediums, vorliegend Druckluft. Das Wartungsgerät 10 ist z.B. als Wartungsmodul ausgebildet, an das weitere derartige Wartungsgeräte modulartig angereiht werden können, so dass insgesamt eine kompakte Wartungseinheit gebildet wird. Bei den weiteren Wartungsgeräten könnte es sich beispielsweise um bekannte und/oder erfindungsgemäß ausgestaltete Trockner, Öler oder sonstige Druckmedium-Konditioniergeräte handeln. Es ist auch ein beispielsweise erfindungsgemäß mit mindestens einem kapazitiven Sensor ausgestattetes multifunktionales Wartungsgerät denkbar, das beispielsweise das Druckmedium filtert und/oder trocknet und/oder mit einem Additiv, zum Beispiel Öl oder einem sonstigen Schmiermittel, versieht.

Von einem Gehäuse 15 des Wartungsgeräts 10 sind in Fig. 1 lediglich ein äußeres Basis-Außengehäuse 16 sowie ein innen in diesem angeordnetes Basis-Innengehäuse 17 gezeigt. Das Innengehäuse 17 steht nach oben über das Außengehäuse 16 vor und ragt in ein nicht dargestelltes Kopfstück des Gehäuses 15 hinein. An diesem Kopfstück sind ein Druckmedium-Einlass sowie ein Druckmedium-Auslass angeordnet, die in Fluidverbindung mit einem im Innern des Innengehäuses 17 angeordneten Wartungsraum 18 stehen. Das Kopfstück kann das Wartungsgerät oben verschließen. Andernfalls ist hierfür ein separater Deckel vorgesehen. Im Kopfstück und/oder im Deckel sind beispielsweise Steuermittel, zum Beispiel eine Steuerelektronik, zur Steuerung und/oder Überwachung des Wartungsgeräts 10 angeordnet. Unten wird das Außengehäuse 16 durch ein nicht dargestelltes Fußteil 19 verschlossen.

Eine vorliegend im Wesentlichen hohlzylindrische Gehäusewandung 20 des Innengehäuses 17 umgibt den Wartungsraum 18. Am unteren Ende des Wartungsraums 18 ist eine Ablasseinrichtung 21 angeordnet, die den Wartungsraum 18 nach unten hin verschließt.

Die Gehäusewandung 20 besteht beispielsweise aus Kunststoff, Glas oder einem sonstigen elektrisch nicht leitenden Material. Es ist aber auch möglich, dass die Gehäusewandung 20 zumindest teilweise aus elektrisch leitendem Material besteht, wobei dann allerdings gesonderte Maßnahmen zur elektrischen Isolierung von zumindest einer später noch erläuterten Elektrode getroffen werden müssen.

Der Wartungsraum 18 erstreckt sich beim Wartungsgerät 10 im Wesentlichen in vertikaler Richtung. Im oberen Abschnitt 23 des Wartungsraums 18 ist eine Filtereinrichtung 22 angeordnet, mit der das Wartungsgerät 10 das Druckmedium filtern kann. Im unteren Abschnitt 24 des Wartungsraums 18 kann sich ein Ausscheidungsprodukt aus dem Druckmedium sammeln, im Ausführungsbeispiel Kondenswasser. Ein Trennteller 25 trennt den oberen und den unteren Abschnitt 23, 24 voneinander. Der Trennteller 25 ist auf einer Betätigungseinrichtung 26 für die Ablasseinrichtung 21 angeordnet, die sich in Längsrichtung des Wartungsraums 18 erstreckt und von der Ablasseinrichtung 21 gehalten wird. Mit der Ablasseinrichtung 21 kann Kondenswasser aus dem Wartungsraum 18 abgelassen werden, das sich in dessen unterem Abschnitt 24 angesammelt hat. Im Wartungsraum 18 können auch weitere, nicht dargestellte Komponenten angeordnet sein, beispielsweise neben dem Trennteller 25 eine so genannte Beruhigungsscheibe oder oben an der Filtereinrichtung 22 eine so genannte Drallscheibe.

Das Wartungsgerät 10 weist einen kapazitiven Sensor 11 mit einer ersten, als Mess-Elektrode 12 bezeichneten Elektrode zur Erfassung von einem oder mehreren Betriebsparametern auf. Ferner ist dem Sensor 11 eine zweite Elektrode 27 zugeordnet, die im Folgenden vereinfacht Gegenelektrode 27 genannt wird. Die Mess-Elektrode 12 kann eine sogenannte aktive Elektrode sein, von der zur Gegenelektrode 27 hin verlaufende Feldlinien ausgehen.

Die Gegenelektrode 27 kann einen integralen Bestandteil des Sensors 11 bilden. Beim Ausführungsbeispiel ist die Gegenelektrode 27 jedoch als separate Komponente ausgeführt, die ebenso wie die Mess-Elektrode 12 mit Auswertemitteln 28 über Verbindungen 29 bzw. 30 verbunden ist. Die Verbindungen 28, 29 können durch fest verbundene, beispielsweise verlötete elektrische Leitungen realisiert sein und/oder Verbindungselemente für lösbare Verbindungen, beispielsweise Stecker, enthalten. Die Auswertemittel 28 und die Mess-Elektrode 12 bilden vorliegend eine Baueinheit 31, die sich leicht am Wartungsgerät 10 montieren, gegebenenfalls auch auswechseln lässt. Es versteht sich, dass auch die Mess-Elektrode 12 fest mit dem Wartungsgerät 10 verbunden sein kann, beispielsweise als Bestandteil der Gehäusewandung 20 ausgebildet sein kann.

Die Mess-Elektrode 12 und die Gegenelektrode 27 sowie die jeweils dazwischen angeordneten Dielektrika, beispielsweise die Gehäusewandung 20, die Filtereinrichtung 22 und im unteren Abschnitt 24 befindliches Kondenswasser, bilden einen Kondensator, dessen Kapazitätswert durch die Auswertemittel 28 ausgewertet wird. In Abhängigkeit von den jeweiligen Dielektrika verändert sich die jeweilige Dielektrizitätskonstante, so dass je nach Zusammensetzung des zwischen den Elektroden 12, 27 befindlichen Dielektrikums sich die so genannte Dielektrizitätskonstante ε verändert. Die Dielektrizitätskonstante ε ist das Produkt aus Dielektrizitätszahl εᵣ und elektrischer Feldkonstante ε₀. Bei Wasser beträgt ε_{R} 80, bei Öl 2 bis 3. Wenn sich im unteren Abschnitt 24 Wasser oder ein Additiv, beispielsweise Öl, befindet, verändert sich die Dielektrizitätskonstante ε entsprechend, so dass die Auswertemittel 28 diese Veränderung an den Elektroden 12, 27 erfassen können.

Im einfachsten Fall wird lediglich ein Grenzwert überwacht, das heißt beispielsweise, wenn sich im Abschnitt 24 eine vorbestimmte Menge Kondenswasser angesammelt hat und die Dielektrizitätskonstante dementsprechend einen oberen Grenzwert erreicht hat, wird dies von den Auswertemitteln 28 erfasst und beispielsweise an eine übergeordnete Steuerung gemeldet und/oder wird die Ablasseinrichtung 21 geöffnet, so dass das Kondenswasser abfließen kann. Dabei wird die Ablasseinrichtung 21 für eine vorbestimmte Zeitspanne geöffnet oder sie bleibt in Abhängigkeit vom Kondenwasser-Pegel so lange geöffnet, bis ein unterer Grenzwert der Dielektrizitätskonstante ε, die einem unteren Kondenwasser-Pegel im unteren Abschnitt 24 entspricht, erreicht ist.

Die Auswertemittel 28 können einen Betriebsparameter jedoch nicht nur durch Vergleich von Messwerten mit einem oder mehreren diskreten Referenzpunkten ermitteln, sondern können den oder die Betriebsparameter auch durch Vergleich der an den Elektroden 12, 27 ermittelten Messwerte mit Kennlinien ermitteln, die in einem Speicher 32 der Auswertemittel 28 abgelegt sind. Bei dem Speicher 32 kann es sich beispielsweise um einen RAM-Baustein oder um einen (E)PROM-Baustein handeln (RAM = Random Access Memory, (E)PROM = (Erasable) Programmable Read Only Memory). Der Speicher 32 wird von einem Auswertemodul 33 der Auswertemittel 28 abgefragt.

Das Auswertemodul 33 ermittelt an den Elektroden 12, 27 Messwerte, beispielsweise durch zyklisches Abtasten, und vergleicht die ermittelten Messwerte mit mindestens einer im Speicher 32 abgelegten Kennlinie, um mindestens einen Betriebsparameter zu ermitteln. Diesen gibt das Auswertemodul 33 an ein Busschnittstellenmodul 34 aus, welches den jeweiligen Betriebsparameter an einen Wartungsbus 35 und/oder einen zentralen Steuerbus 36 ausgibt. Über den als lokaler Bus ausgestalteten Wartungsbus 35 ist das Wartungsgerät 10 mit weiteren Wartungsgeräten, beispielsweise einem Trockner und/oder einem Öler, zu einer Wartungsbaugruppe koppelbar. Über den zentralen Steuerbus 36 - einem übergeordneten Bus - sind die Auswertemittel 28 und damit das Wartungsgerät 10 mit einer zentralen Steuereinrichtung verbindbar. Die nicht dargestellte zentrale Steuereinrichtung kann zur Steuerung und/oder Überwachung des Wartungsgeräts 10 sowie weiterer, nicht dargestellter Komponenten, beispielsweise mit dem Druckmedium versorgter Ventile, vorgesehen sein.

Es ist aber auch möglich, dass die Auswertemittel 28 eine lokale Bedieneinrichtung enthalten oder beispielsweise mittels einer Steckverbindung mit einer lokalen Bedieneinrichtung verbindbar sind, an der die Auswertemittel 28 beispielsweise von ihnen erfasste Messwerte, Grenzwerte, Warnmeldungen oder dergleichen ausgeben können. Die Bedieneinrichtung kann Ausgabemittel, beispielsweise ein LCD-Display (Liquid Crystal Display) und/oder LEDs (Light Emitting Diode), und/oder Eingabemittel, beispielsweise Bedientasten oder dergleichen, enthalten, über die Befehle an die Auswertemittel 28 gegeben werden können. Beispielsweise könnte man über die Eingabemittel eine Liste von Warnmeldungen abfragen oder einen Grenzwert parametrieren. Es kann auch nur eine lokale Bedieneinrichtung und kein Busschnittstellenmodul, z.B. kein Busschnittstellenmodul 34, vorgesehen sein.

Weiter enthalten die Auswertemittel 28 im vorliegenden Beispiel ein Steuermodul 37, welches ein in der Zeichnung nicht dargestelltes Ablassventil der Ablasseinrichtung 21 in Abhängigkeit von mindestens einem durch das Auswertemodul 33 übermittelten Betriebsparameter, ansteuert, das heißt öffnet oder schließt. Bei dem Betriebsparameter handelt es sich im Ausführungsbeispiel um den Pegel oder einen oberen und/oder unteren Pegel-Grenzwert einer Flüssigkeit, die sich im unteren Abschnitt 24 des Wartungsraums 18 befindet. Es versteht sich, dass das Steuermodul 37, das Busschnittstellenmodul 34 sowie der Speicher 32 optionale, zumindest teilweise jedoch bevorzugte Komponenten der Auswertemittel 28 sind.

Die Auswertemittel 28 können aus diskreten elektrischen Bauteilen aufgebaut sein und/oder eine Prozessoranordnung enthalten. Insbesondere im letzteren Fall sind wesentliche Funktionen des Auswertemoduls 33 und/oder des Steuermoduls 37 durch von der Prozessoranordnung ausführbaren Programmcode realisiert.

In dem Speicher 32 kann die mindestens eine Kennlinie dauerhaft abgelegt sein und/oder durch das Auswertemodul 33 eingetragen werden. Die jeweilige Kennlinie kann beispielsweise über den Steuerbus 36 an das Auswertemodul 33 übermittelt werden. Es ist aber auch denkbar, dass das Auswertemodul 33 mindestens eine Kennlinie in einer Art Selbstlernprozess einträgt. Dazu wird das Auswertemodul 33 z.B. in einen Programmiermodus geschaltet und beispielsweise Wasser oder Öl in den Wartungsraum 18, beginnend mit einem unteren Pegel bis hin zu einem oberen Grenz-Pegel, eingefüllt. Währenddessen ermitteln die Auswertemittel 28 beispielsweise die sich dabei einstellenden Kapazitätswerte zwischen den Elektroden 12, 27 und tragen diese als Referenz-Kennlinien in den Speicher 32 ein.

Beim vorigen Beispiel wurden Betriebsparameter des Typs "Kondenswasser" (oder "Öl", bei einem Öler) durch den Sensor 11 erfasst. Der Sensor 11 kann jedoch durch seine vorliegende räumliche Ausgestaltung auch mehrere unterschiedliche Betriebsparameter erfassen, beim Ausführungsbeispiel "Filtereinrichtung 22 vorhanden/nicht vorhanden" sowie "Typ der Filtereinrichtung 22". Hierfür erstrecken sich die Elektroden 12, 27 vorliegend parallel zur Längsachse des Wartungsraums 18, vorliegend in vertikaler Richtung. Bei einer abweichenden Geometrie des Wartungsraums 18 könnten die Elektroden 12, 27 sich auch in anderer Richtung neben diesem erstrecken. Jedenfalls liegen im vorliegenden Beispiel beide Abschnitte 23, 24 zumindest teilweise im Erfassungsbereich der Elektroden 12, 27, so dass elektrische Feldlinien zwischen diesen den Wartungsraum 18 sowohl im Abschnitt 23 als auch im Abschnitt 24 durchdringen. Die Feldlinien werden je nach dem in den jeweiligen Abschnitten 23, 24 befindlichen Dielektrikum, beispielsweise Filtereinrichtung 22 und/oder einer Flüssigkeit, beeinflusst, was sich im Endeffekt auf die an den Elektroden 12, 27 erfassbaren Kapazitäts-Messwerte auswirkt.

Die Elektroden 12, 27 sind beispielsweise als durchgehende, elektrisch leitende Flächen realisiert. Die Gegenelektrode 27 ist beispielsweise eine Kupferfolie, die am Außenumfang der Gehäusewandung 20 angeordnet ist. Anstatt einer Kupferfolie, die beispielsweise als selbstklebende Kupferfolie ausgestaltet ist, wäre es auch denkbar, eine Metallschicht auf die Gehäusewandung 20 aufzudampfen. Jedenfalls ist es bevorzugt, dass zwischen der Gehäusewandung 20 und der Gegenelektrode 27 keine Lufteinschlüsse sind. Allerdings ist es auch denkbar, dass die Gegenelektrode 27 im Innern der Gehäusewandung 20 oder auf der Innenseite der Gehäusewandung 20 zum Wartungsraum 18 hin angeordnet ist. In letzterem Fall ist vorzugsweise eine elektrische Isolierung, zum Beispiel in Form einer Kunststofffolie oder dergleichen, auf der Gegenelektrode 27 angeordnet, so dass diese gegenüber dem Wartungsraum 18 elektrisch isoliert ist.

Die Gegenelektrode 27 umgibt den Wartungsraum 18 in Umfangsrichtung bis auf einen Segmentabschnitt 38. Im Bereich des Segmentabschnittes 38 ist die Mess-Elektrode 12 angeordnet. Im Segmentabschnitt 38 der Gehäusewandung 20 befindet sich ein Sensoraufnahmeraum 39 zur Aufnahme der Mess-Elektrode 12. Der Sensoraufnahmeraum 39 erstreckt sich in Längsrichtung des Wartungsraums 18. Der Sensoraufnahmeraum 39 ist bei der Ausführungsform des Wartungsgeräts 10 gemäß Fig. 1, 3a zum Wartungsraum 18 hin offen und bei den Ausführungsformen gemäß Fig. 3b, 3c durch eine Trennwand 40 getrennt. Die Trennwand 40 ist vorzugsweise dünn ausgestaltet und jedenfalls dünner als die Gehäusewandung 20. Bei den Ausführungsformen gemäß Fig. 3b, 3c könnte man auch sagen, dass der Sensoraufnahmeraum 39 in der Gehäusewandung 20 ausgebildet ist. Die Trennwand 40 isoliert die Mess-Elektrode 12 zum Wartungsraum 18 elektrisch. Bei fehlender Trennwand 40 (Fig. 1, 3a) weist der Sensor 11 in seiner Ausführungsform 11a ein Schutzgehäuse 41 auf, das ihn gegenüber dem Wartungsraum 18 mechanisch und/oder elektrisch isoliert.

Bei den Sensoren 11a, 11b ist die Mess-Elektrode 12 an einem diese haltenden und fixierenden Haltemittel 42 angeordnet. Die Elektrode 12 kann beispielsweise durch ein auf das Haltemittel 42 aufgedampftes Metall oder durch eine auf dieses aufgebrachte Metallfolie gebildet werden. Die gezeigte Dicke der Mess-Elektrode 12 ist nur beispielhaft zu verstehen. Sie kann ohne weiteres sehr dünn sein oder, wie beispielsweise beim Sensor 11c, bei dem das Haltemittel 42 fehlt, verhältnismäßig dick, so dass sie ohne unterstützendes Haltemittel in den Sensoraufnahmeraum 39 eingebracht werden kann. Es ist auch denkbar, dass die Mess-Elektrode 12 einen Bestandteil der Gehäusewandung 20 bildet, beispielsweise ein elektrisch leitender Abschnitt ist, der bereits beim Fertigen der Gehäusewandung 20 in diese integriert wird.

Das Haltemittel 42, beim Sensor 11a auch das Schutzgehäuse 41, weisen eine sich in Längsrichtung verjüngende, vorliegend halbkonische Außenkontur auf. Der Sensoraufnahmeraum 39 besitzt eine mit dieser korrelierende Innenkontur, so dass das Haltemittel 42 des Sensors 11b mit der darauf angeordneten Mess-Elektrode 12 bzw. das Schutzgehäuse 41 beim Sensor 11a keilartig in den jeweiligen Sensoraufnahmeraum 39 einbringbar und in diesem fixierbar ist. In jedem Fall wird dadurch die Mess-Elektrode 12 mit Bezug auf den Wartungsraum 18 ortsfest gehalten, so dass die an den Elektroden 12, 27 abtastbaren Messwerte reproduzierbar sind.

Bei den Ausführungsformen gemäß Fig. 3a, 3b ist die Gehäusewandung 20 im vom Wartungsraum 18 abgewandten Bereich hinter der jeweiligen Mess-Elektrode 12 verdickt, um eine ausreichende Wandstärke der Gehäusewandung 20 zu gewährleisten. Insbesondere in Fig. 3b ist ein gestrichelter Verlauf der Außenkontur der Gehäusewandung 20 ohne Verdickung eingezeichnet. Wenn jedoch die Gehäusewandung 20 bereits an sich schon eine ausreichende Dicke aufweist und/oder die Mess-Elektrode 12 verhältnismäßig schlank ist, wie in Fig. 3c gezeigt, ist eine solche Verdickung nicht unbedingt erforderlich.

Der Mess-Elektrode 12 ist eine Abschirmung 43 zugeordnet, die auf der dem Wartungsraum 18 abgewandten Seite der Mess-Elektrode 12 angeordnet ist. Die Abschirmung 43 wird beispielsweise durch eine aufgedampfte oder aufgeklebte Metallfläche gebildet und ist vorliegend über eine feste oder lösbare Verbindung 44 mit den Auswertemitteln 28 verbunden. Beim Ausführungsbeispiel erstreckt sich die Abschirmung 43 entlang der Längsrichtung der Mess-Elektrode 12. Bei den gezeigten Beispielen (Fig. 3a - 3c) ist die Abschirmung 43 außenseitig an der Gehäusewandung 20 angeordnet. Es ist aber auch möglich, dass eine Abschirmung an der Mess-Elektrode 12 angeordnet ist, wobei sie in diesem Falle elektrisch von ihr getrennt ist. Beispielsweise könnte man auf das Haltemittel 42 eine als Abschirmung dienende Metallschicht aufbringen, auf diese Schicht eine Isolierschicht, zum Beispiel aus Kunststoff, und auf die Isolierschicht wiederum eine als Mess-Elektrode 12 dienende Metallschicht. Es wäre aber auch möglich, dass die Elektrode 12 an einer Seite einer Leiterplatte und eine Abschirmung an einer dieser Seite entgegengesetzten Seite der Leiterplatte angeordnet sind.

Bei allen vorgenannten Ausführungsformen ist die Mess-Elektrode 12 bevorzugt möglichst nahe zum Wartungsraum 18 angeordnet ist, um den Einfluss der Gehäusewandung 20 als Dielektrikum zu minimieren. Gleiches gilt auch für die Gegenelektrode 27. Allerdings sind die gezeigten Ausführungsformen, bei denen die Gegenelektrode 27 außen an der Gehäusewandung 20 angeordnet ist, fertigungstechnisch vorteilhaft. Vorzugsweise sollen auch im Bereich der Mess-Elektrode 12 und/oder der Gegenelektrode 27 möglichst keine Lufteinschlüsse sein. Hierfür könnte man beispielsweise beim Sensor 11a das beispielsweise aus Kunststoff bestehende Schutzgehäuse 41 um die Mess-Elektrode 12 und das Haltemittel 42 gießen.

Die Anordnung und Ausgestaltung der Elektroden 12, 27 beim Wartungsgerät 10 stellen an sich schon eine eigenständige Erfindung dar. Gleiches gilt für die Zusammenfassung von Mess-Elektrode 12 und Auswertemitteln 28 zur Baueinheit 31, die ein auswechselbares, zumindest aber leicht montierbares Sensormodul 45 bildet.

Das Sensormodul 45 enthält ein Basisgehäuse 46 mit einem Bodenteil 47 und einem Deckelteil 48. Am Basisgehäuse 46 sind nicht dargestellte Kabel und/oder Steckkontakte oder sonstige Kontaktflächen zur Kontaktierung von beispielsweise der Gegenelektrode 27 und dem Steuerbus 36 und/oder einer oben erläuterten, nicht dargestellten Bedieneinrichtung angeordnet. Im Basisgehäuse 46 sind die Komponenten der Auswertemittel 28 auf einer Leiterplatte 49 angeordnet. Am Basisgehäuse 46 ist eine - vorliegend in dessen Mitte vertikal verlaufende - Durchgangs-Öffnung 50 angeordnet, die im montierten Zustand von der Ablasseinrichtung 21 durchdrungen wird. Vorliegend weist das Basisgehäuse 46 eine zylindrische Gestalt auf. Entsprechend ist die im Innern angeordnete Leiterplatte 49 kreisscheibenartig ausgestaltet und weist einen mit der Öffnung 50 korrespondierenden Durchbruch 51 auf. Das Basisgehäuse 46 ist im montierten Zustand im Bodenbereich des Wartungsgeräts 10 angeordnet. Vom Basisgehäuse 46 steht nach oben hin das die Mess-Elektrode 12 haltende Haltemittel ab. Das Haltemittel 42 wird von einem am Basisgehäuse 46 oberseitig angeordneten Schaft 52 gehalten. Am Schaft 52 ist eine Dichtung 53 zur Abdichtung des Wartungsraums 18 und/oder des Sensoraufnahmeraums 39 angeordnet. Die Mess-Elektrode 12 durchdringt den Schaft 52 und ist mit der Leiterplatte 49 elektrisch verbunden.

Der Sensor 11a für das Wartungsgerät 10a gemäß Fig. 1 weist grundsätzlich den gleichen Aufbau wie der Sensor 11b gemäß Fig. 2 auf, wobei allerdings zusätzlich ein die Mess-Elektrode 12 und das Haltemittel 42 umgebendes Schutzgehäuse 41 vorgesehen ist. Das Schutzgehäuse 41 sitzt auf dem Schaft 52 dicht auf. Es ist auch möglich, dass unten am Schutzgehäuse ein Schaft ausgebildet ist.

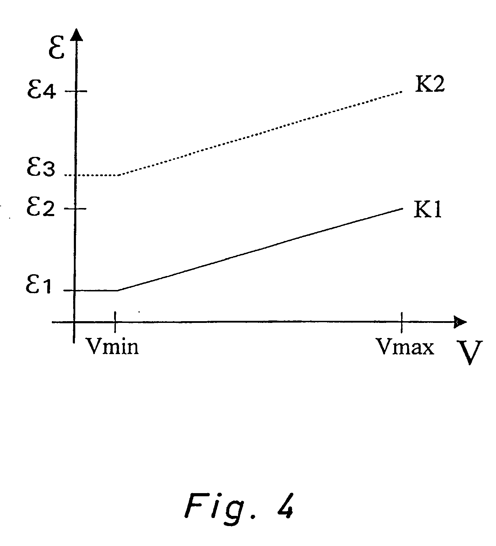

Bei den seitherigen Beispielen ist die Erfassung unterschiedlicher Werte jeweils eines Betriebsparameters mit jeweils einer Elektrode 12, 27 erläutert worden. Bereits mit dieser Anordnung ist es möglich, mehrere unterschiedliche Betriebsparameter zu erfassen. Dies soll anhand von Fig. 4 verdeutlicht werden, bei der Dielektrizitäts-Kennlinien K1, K2 gezeigt sind, die bei variablem Volumen V von Kondenswasser im unteren Abschnitt 24 an den Elektroden 12, 27 erfassbar sind.

Sowohl der untere Abschnitt 24 als auch der obere Abschnitt 23 des Wartungsraums 18 liegen im Erfassungsbereich der Elektroden 12, 27. Wenn eine Filtereinrichtung 22 eines Typs "1" in den oberen Abschnitt 23 eingebracht wird und sich im unteren Abschnitt 24 noch kein Kondenswasser angesammelt hat (Volumen des Kondenswasser < Vₘᵢₙ), nimmt die Dielektrizitätskonstante ε im Wartungsraum 18 einen Anfangswert ε₁ an. Sammelt sich anschließend Kondenswasser im Abschnitt 24 an, so steigt die Dielektrizitätskonstante ε entlang einer Kennlinie K1 an, so lange, bis das Volumen des Kondenswassers einen Wert Vₘₐₓ erreicht, bei dem die Dielektrizitätskonstante ε = ε₂ ist. An den Elektroden 12, 27 tasten die Auswertemittel 28 Kapazitätswerte ab, die von der sich gemäß Kennlinie K2 verändernden Dielektrizitätskonstante ε abhängen.

Wird eine Filtereinrichtung 22 eines Typs "2" in den Wartungsraum 18 eingebracht, lautet der Anfangswert der Dielektrizitätskonstante (bei V = Vₘᵢₙ) ε = ε₃. Steigt das Kondenswasser im Abschnitt 24 an, so steigt die Dielektrizitätskonstante s gemäß der Kennlinie K2 auf einen Wert ε₄ an, wenn das Volumen des Kondenswassers V = Vₘₐₓ erreicht. Hierzu sei angemerkt, dass die Fig. 4 ein sehr vereinfachtes Verhalten der Dielektrizitätskonstante ε zeigt. Andere Verläufe, insbesondere nichtlineare Verläufe, sind ohne weiteres möglich.

Es versteht sich, dass Referenz-Kennlinien von Dielektrizitätskonstanten, wie in Figur 4 gezeigt, und/oder von Kapazitätswerten im Speicher 32 abgelegt sein können. Jedenfalls sind die Kennlinien vorzugsweise digitalisiert, d.h., es sind digitale Werte von sogenannten Stützpunkten der jeweiligen Kennlinien im Speicher 32 abgelegt.

In einer bevorzugten Variante der Erfindung ist jedoch nicht nur eine einzige Mess-Elektrode 12 vorgesehen, sondern mehrere erste Mess-Elektroden. Diese können individuell frei platzierbare Elektroden sein oder, wie in Fig. 2 gezeigt, als zusammenhängende Elektrodenanordnung ausgestaltet sein. Bei dem Beispiel gemäß Fig. 2 sind mehrere erste Mess-Elektroden 56 - 60 in Längsrichtung des Haltemittels 42 und damit in Längsrichtung zum Wartungsraum 18 benachbart zueinander angeordnet. Dabei ist jede Mess-Elektrode 56 - 60 einem separaten Abschnitt des Wartungsraums 18 zugeordnet, so dass ein dort jeweils befindliches Dielektrikum durch die jeweilige Mess-Elektrode 56 - 60 erfassbar ist. Beispielsweise können die Mess-Elektroden 59 und/oder 60 die Filtereinrichtung 22 detektieren, wohingegen die Mess-Elektroden 56, 57, 58 sich im Abschnitt 24 ansammelndes Kondenswasser erfassen können.

Jede Mess-Elektrode 56 - 60 ist vorliegend mit den Auswertemitteln 28 verbunden. Beispielsweise werden die Mess-Elektroden 56 - 60 von den Auswertemitteln in einem vorbestimmten Zyklus abgetastet. In Abhängigkeit vom jeweils ermittelten Messwert ermitteln die Auswertemittel dann den jeweils davon abhängigen Betriebsparameter.

Es ist aber auch möglich, dass für jede der Mess-Elektroden 56 - 60 separate Auswertemittel oder separate Teilmodule der Auswertemittel vorgesehen sind. Ferner kann eine erste Gruppe von Mess-Elektroden, zum Beispiel die Mess-Elektroden 56 - 58, ersten Auswertemitteln und eine zweite Gruppe von Mess-Elektroden, zum Beispiel die Mess-Elektroden 59, 60, zweiten Auswertemitteln zugeordnet sein.

Die Filtereinrichtung 22 ist als eine aus dem Wartungsgerät 10 auswechselbare Filterpatrone ausgestaltet. Sie besteht beispielsweise aus einem kreiszylindrischen Haltering 54, der ein Filtervlies 55 hält. An der Filtereinrichtung 22 sind kapazitiv erfassbare Codierungen 61 angeordnet, bei denen es sich beispielsweise um am Filtervlies 55 angeordnete Metallelemente handelt. Es ist auch möglich, dass das Filtervlies 55 beispielsweise Metallelemente, Glimmmer oder dergleichen enthält. Ferner ist es denkbar, dass man als Dielektrikum unterschiedlich wirkende Materialien für unterschiedliche Typen von Filtereinrichtungen verwendet, beispielsweise ensprechende Materialien für das Filtervlies 55. Ferner kann auch der Haltering 54 als kapazitiv erfassbare Codierung dienen, wobei dieser beispielsweise aus unterschiedliche Dielektrizitätszahlen aufweisenden Stoffen aufgebaut ist und/oder durch seine räumliche Dimensionierung als kapazitiv erfassbare Codierung ausgestaltet ist. Sinngemäß das Gleiche gilt auch für andere Verbrauchsmittel, beispielsweise für ein Additiv, das im unteren Abschnitt 24 angeordnet ist und dem Druckmedium zugesetzt werden soll. Auch dieses kann durch Zusatzstoffe kapazitiv codiert sein, beispielsweise durch geringe Beimengung von Metallpartikeln, Graphit oder dergleichen.

Beliebige Kombinationen der in der Beschreibung sowie in den Ansprüchen angegebenen Maßnahmen sind ohne weiteres möglich. Ferner sind weitere Varianten der Erfindung möglich:
Beispielsweise kann man als kapazitive Codierung keramische Sondermassen mit Barium oder Titan verwenden, die verhältnismäßig hohe Dielektrizitätszahlen aufweisen.
Die Gehäusewandung 20 kann alternativ auch beispielsweise aus Glas, Keramik oder Porzellan sein. Auch Mischformen sind ohne weiteres möglich. Es versteht sich, dass durch den erfindungsgemäßen Sensor auch andere Betriebsparameter als im Ausführungsbeispiel gezeigt ermittelbar sind. Beispielsweise könnte man mit einem erfindungsgemäßen Sensor auch eine Druckerfassung und/oder eine Durchflusserfassung des Druckmediums durchführen. Dazu könnte man beispielsweise die Mess-Elektrode 60 beweglich anordnen, so dass sie in Abhängigkeit von Druck und/oder Durchfluss auslenkbar ist und dementsprechend unterschiedliche Kapazitätswerte an ihr abtastbar sind.
Es versteht sich, dass anstelle einer einzigen Gegenelektrode 27 auch mehrere Gegenelektroden möglich sind. Dies gilt sowohl in Kombination mit einer einzigen Mess-Elektrode, beispielsweise der Mess-Elektrode 12, als auch in Kombination mit mehreren ersten Mess-Elektroden, beispielsweise den Mess-Elektroden 56 - 60.
Anstatt der gezeigten Bauformen des Wartungsgeräts 10, bei denen der Segmentabschnitt 38 verhältnismäßig schmal ist und die Mess-Elektrode 12 dementsprechend kompakt bauend ausgestaltet ist, sind auch andere geometrische Ausgestaltungen möglich, bei denen der Wartungsraum von elektrischen Feldlinien zwischen der Mess-Elektrode und der Gegenelektrode durchdrungen wird. Beispielsweise könnte die Mess-Elektrode auch einen größeren Anteil des Außenumfangs des Wartungsraums einnehmen, wobei es bevorzugt ist, dass die Mess-Elektrode maximal etwa die Hälfte des Außenumfangs des Wartungsraums einnimmt und die Gegenelektrode den entsprechend verbleibenden anderen Anteil des Außenumfangs des Wartungsraums.

## Patentansprüche

1. Wartungsgerät, insbesondere Öler oder Filtergerät, zur Aufbereitung von Druckluft, mit einem kapazitiven Sensor (11; 11a; 11b; 11c) mit mindestens einer ersten Elektrode (12; 56-60) zum Erfassen mindestens eines Betriebsparameters des Wartungsgeräts (10), mit einem Gehäuse (15) mit einem in dessen Innern angeordneten Wartungsraum (18) zur Aufnahme eines zur Aufbereitung der Druckluft verwendbaren Verbrauchsmittels (22) und/oder zur Aufnahme von Ausscheidungsprodukten aus der Druckluft, wobei eine Gehäusewandung (20) des Gehäuses (15) den Wartungsraum (18) umgibt, und wobei der Sensor (11; 11a; 11b; 11c) dem Wartungsraum (18) zum Erfassen eines dort anordenbaren Dielektrikums zugeordnet ist, von dem der mindestens eine Betriebsparameter abhängt, wobei die Gehäusewandung (20) einen Sensoraufnahmeraum (39) für die mindestens eine erste Elektrode (12; 56-60) des Sensors (11; 11a; 11b; 11c) aufweist, **dadurch gekennzeichnet, dass** der Sensoraufnahmeraum (39) vom Wartungsraum (18) durch eine Trennwand (40) getrennt ist oder, wenn der Sensoraufnahmeraum (39) zum Wartungsraum (18) offen ist, die mindestens eine erste Elektrode (12; 56-60) in einem Schutzgehäuse (41) angeordnet ist, und dass die mindestens eine erste Elektrode (12; 56-60) eine mit der Längsachse des Wartungsraums korrelierende langgestreckte Form zur Anordnung parallel zur Längsachse des Wartungsraums (18) aufweist.

2. Wartungsgerät nach Anspruch 1, **dadurch gekennzeichnet, dass** die Gehäusewandung (20) mindestens eine zweite, als Gegenelektrode ausgebildete Elektrode (27) des Sensors (11; 11a; 11b; 11c) aufweist und/oder ein Bereich der Gehäusewandung (20) mindestens eine solche zweite Elektrode (27) des Sensors (11; 11a; 11b; 11c) bildet, so dass elektrische Feldlinien zwischen der mindestens einen ersten Elektrode (12; 56-60) und der mindestens einen zweiten Elektrode (27) den Wartungsraum (18) durchdringen.

3. Wartungsgerät nach einem der vorhergehenden Ansprüche, **dadurch gekennzeichnet, dass** der Sensor (11; 11a; 11b; 11c) sich entlang mindestens eines ersten und eines zweiten Abschnitts (23, 24) des Wartungsraums (18) erstreckt, und dass durch den Sensor (11; 11a; 11b; 11c) in dem ersten Abschnitt (23) mindestens ein erster Betriebsparameter des Wartungsgeräts (10) und in dem zweiten Abschnitt (24) mindestens ein zweiter Betriebsparameter des Wartungsgeräts (10) erfassbar ist.

4. Wartungsgerät nach einem der vorhergehenden Ansprüche, **dadurch gekennzeichnet, dass** die Trennwand (40) dünner als die Gehäusewandung (20) ist.

5. Wartungsgerät nach einem der vorhergehenden Ansprüche, **dadurch gekennzeichnet, dass** der mindestens einen ersten Elektrode (12; 56-60) eine Abschirmung (43) zugeordnet ist, die benachbart zu der dem Wartungsraum (18) abgewandten Seite der mindestens einen ersten Elektrode (12; 56-60) angeordnet ist.

6. Wartungsgerät nach einem der vorhergehenden Ansprüche, **dadurch gekennzeichnet, dass** die Längsachse des Wartungsraums (18) in vertikaler Richtung verläuft.

7. Wartungsgerät nach einem der vorhergehenden Ansprüche, **dadurch gekennzeichnet, dass** die mindestens eine erste Elektrode (12; 56-60) plattenartig, insbesondere als Leiterplatte ausgestaltet ist.

8. Wartungsgerät nach einem der vorhergehenden Ansprüche, **dadurch gekennzeichnet, dass** die mindestens eine erste Elektrode (12; 56-60)- an einem diese haltenden und fixierenden Haltemittel (42) angeordnet ist, das zum Halten der mindestens einen ersten Elektrode (12; 56-60) in dem Sensoraufnahmeraum (39) ausgebildet ist, und dass das Haltemittel (42) mit der darauf angeordneten mindestens einen ersten Elektrode (12; 56-60) eine sich in Längsrichtung verjüngende, insbesondere halbkonische, Außenkontur und der Sensoraufnahmeraum (39) eine mit dieser Außenkontur korrelierende Innenkontur aufweist, so dass das Haltemittel (42) mit der darauf angeordneten mindestens einen ersten Elektrode (12; 56-60) keilartig in den Sensoraufnahmeraum (39) einbringbar und in diesem fixierbar ist.

9. Wartungsgerät nach einem der vorhergehenden Ansprüche, **dadurch gekennzeichnet, dass** dem Sensor (11; 11a; 11b; 11c) Auswertemittel (28) zum Erfassen von Messwerten an der mindestens einen ersten Elektrode (12; 56-60) und der mindestens einen zweiten Elektrode (27) und zum Ermitteln des mindestens einen Betriebsparameters durch Vergleich der Messwerte mit mindestens einem Referenzwert zugeordnet sind.

10. Wartungsgerät nach Anspruch 9, **dadurch gekennzeichnet, dass** die Auswertemittel (28) und die mindestens eine erste Elektrode (12; 56-60) eine insbesondere auswechselbare Baueinheit (31) bilden.

11. Wartungsgerät nach Anspruch 9 oder 10, **dadurch gekennzeichnet, dass** die Auswertemittel (28) in einem im Deckel- oder Bodenbereich des Wartungsgeräts (10) anordenbaren Basisgehäuse (46) angeordnet sind, von dem die mindestens eine erste Elektrode (12; 56-60) absteht.

12. Wartungsgerät nach einem der vorhergehenden Ansprüche, **dadurch gekennzeichnet, dass** das Dielektrikum ein Verbrauchsmittel (22), insbesondere eine Filtereinrichtung oder ein Additiv, und/oder eine Flüssigkeit, insbesondere Wasser und/oder Öl, und/oder ein parameterabhängiges sich bewegendes und dabei den Dielektrizitätswert im Wartungsraum (18) veränderndes Element ist.

13. Wartungsgerät nach einem der vorhergehenden Ansprüche, **dadurch gekennzeichnet, dass** es zur Aufbereitung der Druckluft mit einem auswechselbaren Verbrauchsmittel, insbesondere einer Filtereinrichtung oder einem Additiv, ausgestattet ist, das eine kapazitiv erfassbare Codierung (61) aufweist, anhand derer mindestens ein Betriebsparameter des Verbrauchsmittels (22) von dem kapazitiven Sensor (11; 11a; 11b; 11c) des Wartungsgeräts (10) erfassbar ist.

14. Wartungsgerät nach Anspruch 13, **dadurch gekennzeichnet, dass** die Codierung (61) unterschiedlich große Metallanteile aufweist.

15. Wartungsgerät nach Anspruch 13 oder 14, **dadurch gekennzeichnet, dass** die Codierung (61) durch eine räumliche Dimensionierung des Verbrauchsmittels (22) gebildet ist.

## Claims

1. Conditioner unit, in particular lubricator or filter unit, for conditioning compressed air, with a capacitive sensor (11; 11a; 11 b; 11c) with at least one first electrode 12; 56-60) for the detection of at least one operating parameter of the conditioner unit (10), with a housing (15) accommodating in its interior a conditioning chamber (18) for the accommodation of a consumable (22) usable for conditioning the compressed air and/or for the accommodation of products separated from the compressed air, wherein a housing wall (20) of the housing (15) surrounds the conditioning chamber (18), and wherein the sensor (11; 11a; 11b; 11c) is assigned to the conditioning chamber (18) for the detection of a dielectric to be located there, on which the at least one operating parameter depends, wherein the housing wall (20) is provided with a sensor location (39) for the at least one first electrode (12; 56-60) of the sensor (11; 11a; 11b; 11c), **characterised in that** the sensor location (39) is separated from the conditioning chamber (18) by a partition (40), or **in that**, if the sensor location (39) is open towards the conditioning chamber (18), the at least one first electrode (12; 56-60) is located in a protective housing (41), and **in that** the at least one first electrode (12; 56-60) has an elongated shape correlating with the longitudinal axis of the conditioning chamber for arrangement parallel to the longitudinal axis of the conditioning chamber (18).

2. Conditioner unit according to claim 1, **characterised in that** the housing wall (20) comprises at least one second electrode (27) of the sensor (11; 11a; 11b; 11c), which is designed as a counter electrode, and/or **in that** an area of the housing wall (20) represents at least one such second electrode (27) of the sensor (11; 11a; 11b; 11c), so that electric field lines penetrate the conditioning chamber (18) between the at least one first electrode (12; 56-60) and the at least one second electrode (27).

3. Conditioner unit according to any of the preceding claims, **characterised in that** the sensor (11; 11 a; 11b; 11 c) extends along at least one first and one second section (23, 24) of the conditioning chamber (18), and **in that** the sensor (11; 11a; 11b; 11c) is capable of detecting in the first section (23) at least one first operating parameter of the conditioner unit (10) and in the second section (24) at least one second operating parameter of the conditioner unit (10).

4. Conditioner unit according to any of the preceding claims, **characterised in that** the partition (40) is thinner than the housing wall (20).

5. Conditioner unit according to any of the preceding claims, **characterised in that** a screen (43) is assigned to the at least one first electrode (12; 56-60), this being located adjacent to the side of the at least one first electrode (12; 56-60) which is remote from the conditioning chamber (18).

6. Conditioner unit according to any of the preceding claims, **characterised in that** the longitudinal axis of the conditioning chamber (18) runs in the vertical direction.

7. Conditioner unit according to any of the preceding claims, **characterised in that** the at least one first electrode (12; 56-60) is designed plate-like, in particular as a printed circuit board.

8. Conditioner unit according to any of the preceding claims, **characterised in that** the at least one first electrode (12; 56-60) is held and located on retaining means (42) provided for holding the at least one first electrode (12; 56-60) in the sensor location (39), and **in that** the retaining means (42) with the at least one first electrode (12; 56-60) located thereon have an in particular semi-conical external contour tapering in the longitudinal direction and the sensor location (39) has an internal contour correlating with said external contour, so that the retaining means (42) with the at least one first electrode (12; 56-60) located thereon can be inserted into and located in the sensor location (39) in the manner of a wedge.

9. Conditioner unit according to any of the preceding claims, **characterised in that** evaluation means (28) for the detection of measured values at the at least one first electrode (12; 56-60) and at the at least one second electrode (27) and for the determination of the at least one operating parameter by comparing the measured values to at least one reference value are assigned to the sensor (11; 11 a; 11 b; 11 c).

10. Conditioner unit according to claim 9, **characterised in that** the evaluation means (28) and the at least one first electrode (12; 56-60) form an in particular replaceable assembly (31).

11. Conditioner unit according to claim 9 or 10, **characterised in that** the evaluation means (28) are located in a base housing (46), which can be placed in the cover or base area of the conditioner unit (10) and from which the at least one first electrode (12; 56-60) projects.

12. Conditioner unit according to any of the preceding claims, **characterised in that** the dielectric is a consumable (22), in particular a filter device or an additive and/or a liquid, in particular water and/or oil, and/or a parameter-dependent moving element altering the dielectric constant in the conditioning chamber (18).

13. Conditioner unit according to any of the preceding claims, **characterised in that** it is equipped with a consumable, in particular with a filter device or an additive, for conditioning the compressed air, which consumable has a capacitively detectable coding (61), by means of which at least one operating parameter of the consumable (22) can be detected by the capacitive sensor (11; 11a; 11b; 11c) of the conditioner unit (10).

14. Conditioner unit according to claim 13, **characterised in that** the coding (61) features metal components of different sizes.

15. Conditioner unit according to claim 13 or 14, **characterised in that** the coding (61) is represented by a spatial dimensioning of the consumable (22).

## Revendications

1. Dispositif de maintenance, en particulier lubrificateur ou dispositif de filtrage, destiné à la préparation d'air comprimé, comportant un capteur (11 ; 11a ; 11b ; 11 c) capacitif avec au moins une première électrode (12 ; 56-60) destinée à enregistrer au moins un paramètre de service du dispositif de maintenance (10), un carter (15) avec une chambre de maintenance (18), aménagée à l'intérieur de celui-ci et destinée à recevoir un consommable (22), utilisable pour la préparation de l'air comprimé, et/ou destinée à recevoir des produits séparés de l'air comprimé, une paroi (20) du carter (15) entourant la chambre de maintenance (18) et le capteur (11 ; 11a; 11b; 11 c) étant associé à la chambre de maintenance (18) pour détecter un diélectrique, qui est présent dans celle-ci et dont dépend ledit au moins un paramètre de service, la paroi (20) du carter comportant un logement de capteur (39) destiné à recevoir ladite au moins une première électrode (12 ; 56-60) du capteur (11 ; 11a ; 11 b ; 11 c), **caractérisé en ce que** le logement de capteur (39) est séparé de la chambre de maintenance (18) par une cloison (40) ou, lorsque le logement de capteur (39) est ouvert vers la chambre de maintenance (18), ladite au moins une première électrode (12 ; 56-60) est disposée dans un boîtier de protection (41), et **en ce que** ladite au moins une première électrode (12 ; 56-60) possède une forme allongée, en corrélation avec l'axe longitudinal de la chambre de maintenance, pour être disposée parallèlement à l'axe longitudinal de la chambre de maintenance (18).

2. Dispositif de maintenance selon la revendication 1, **caractérisé en ce que** la paroi (20) du carter comporte au moins une deuxième électrode (27), formant une contre-électrode, du capteur (11 ; 11 a ; 11b ; 11c) et/ou une zone de la paroi (20) du carter forme au moins une telle deuxième électrode (27) du capteur (11 ; 11a ; 11b ; 11c), de telle sorte que des lignes de champ électriques traversent la chambre de maintenance (18) entre ladite au moins une première électrode (12 ; 56-60) et ladite au moins une deuxième électrode (27).

3. Dispositif de maintenance selon l'une des revendications précédentes, **caractérisé en ce que** le capteur (11 ; 11a ; 11b ; 11 c) s'étend le long d'au moins une première et d'une deuxième partie (23, 24) de la chambre de maintenance (18), et **en ce qu'**au moins un premier paramètre de service du dispositif de maintenance (10) peut être enregistré dans la première partie (23) et au moins un deuxième paramètre de service du dispositif de maintenance (10) peut être enregistré dans la deuxième partie (24) au moyen du capteur (11 ; 11a ; 11b ; 11c).

4. Dispositif de maintenance selon l'une des revendications précédentes, **caractérisé en ce que** la cloison (40) est plus mince que la paroi (20) du carter.

5. Dispositif de maintenance selon l'une des revendications précédentes, **caractérisé en ce qu'**à ladite au moins une première électrode (12 ; 56-60) est associé un blindage (43) qui est disposé à proximité de la face, détournée de la chambre de maintenance (18), de ladite au moins une première électrode (12 ; 56-60).

6. Dispositif de maintenance selon l'une des revendications précédentes, **caractérisé en ce que** l'axe longitudinal de la chambre de maintenance (18) s'étend dans la direction verticale.

7. Dispositif de maintenance selon l'une des revendications précédentes, **caractérisé en ce que** ladite au moins une électrode (12 ; 56-60) est réalisée sous forme de plaquette, en particulier sous forme de plaquette de circuits imprimés.

8. Dispositif de maintenance selon l'une des revendications précédentes, **caractérisé en ce que** ladite au moins une première électrode (12 ; 56-60) est disposée sur un élément de support (42), qui maintient et fixe celle-ci et qui est conçu pour retenir ladite au moins une première électrode (12 ; 56-60) dans le logement de capteur (39), et **en ce que** l'élément de support (42), conjointement avec ladite au moins une première électrode (12 ; 56-60) disposée sur celui-ci, possède un contour extérieur se rétrécissant dans le sens longitudinal, en particulier semi-conique, et le logement de capteur (39) possède un contour intérieur correspondant à ce contour extérieur, de telle sorte que l'élément de support (42), conjointement avec ladite au moins une première électrode (12 ; 56-60) disposée sur celui-ci, peut être inséré à la manière d'une clavette dans le logement de capteur (39) et peut être fixé dans celui-ci.

9. Dispositif de maintenance selon l'une des revendications précédentes, **caractérisé en ce qu'**au capteur (11 ; 11a ; 11b ; 11 c) sont associés des moyens d'analyse (28) destinés à enregistrer des valeurs de mesure sur ladite au moins une première électrode (12 ; 56-60) et ladite au moins une deuxième électrode (27) et destinés à déterminer ledit au moins un paramètre de service par comparaison des valeurs de mesure à au moins une valeur de référence.

10. Dispositif de maintenance selon la revendication 9, **caractérisé en ce que** les moyens d'analyse (28) et ladite au moins une première électrode (12; 56-60) forment une unité (31), en particulier interchangeable.

11. Dispositif de maintenance selon la revendication 9 ou 10, **caractérisé en ce que** les moyens d'analyse (28) sont disposés dans un boîtier de base (46), qui peut être disposé dans la zone de couvercle ou la zone de fond du dispositif de maintenance (10), et sur lequel ladite au moins une première électrode (12 ; 56-60) est en saillie.

12. Dispositif de maintenance selon l'une des revendications précédentes, **caractérisé en ce que** le diélectrique est un consommable (22), en particulier un élément filtrant ou un additif, et/ou un liquide, en particulier de l'eau et/ou de l'huile, et/ou un élément se déplaçant en fonction des paramètres et, à cette occasion, faisant varier la permittivité dans la chambre de maintenance (18).

13. Dispositif de maintenance selon l'une des revendications précédentes, **caractérisé en ce que**, pour la préparation de l'air comprimé, il est équipé d'un consommable interchangeable, en particulier d'un élément filtrant ou un additif, qui comporte un codage (61), apte à être détecté par voie capacitive et à l'aide duquel au moins un paramètre de service du consommable (22) peut être enregistré par le capteur (11 ; 11a; 11b; 11c) capacitif du dispositif de maintenance (10).

14. Dispositif de maintenance selon la revendication 13, **caractérisé en ce que** le codage (61) comporte des particules métalliques de différentes tailles.

15. Dispositif de maintenance selon la revendication 13 ou 14, **caractérisé en ce que** le codage (61) est formé par un dimensionnement tridimensionnel du consommable (22).
